Europäisches Patentamt

European Patent Office

Office européen des brevets

(19)

(11) **EP 0 956 428 B1**

(12) **EUROPÄISCHE PATENTSCHRIFT**

(45) Veröffentlichungstag und Bekanntmachung des Hinweises auf die Patenterteilung:
**04.07.2001 Patentblatt 2001/27**

(51) Int Cl.[7]: **E21B 43/25, E21B 33/138**

(21) Anmeldenummer: **97953849.3**

(22) Anmeldetag: **18.12.1997**

(86) Internationale Anmeldenummer:
**PCT/EP97/07112**

(87) Internationale Veröffentlichungsnummer:
**WO 98/27315 (25.06.1998 Gazette 1998/25)**

(54) **VERFAHREN ZUR STABILISIERUNG DES GASFLUSSES IN WASSERFÜHRENDEN ERDGASLAGERSTÄTTEN UND ERDGASSPEICHERN**

METHOD FOR STABILIZING THE GAS FLOW IN WATER-BEARING NATURAL GAS DEPOSITS OR RESERVOIRS

PROCEDE POUR LA STABILISATION DU FLUX DE GAZ DANS DES GISEMENTS OU DES RESERVES DE GAZ NATUREL AQUIFERES

(84) Benannte Vertragsstaaten:
**DE GB IT NL**

(30) Priorität: **19.12.1996 DE 19653136**

(43) Veröffentlichungstag der Anmeldung:
**17.11.1999 Patentblatt 1999/46**

(73) Patentinhaber: **Wacker-Chemie GmbH**
**81737 München (DE)**

(72) Erfinder:
• **PUSCH, Günter**
**D-29227 Celle (DE)**
• **MEYN, Rüdiger**
**D-38678 Clausthal-Zellerfeld (DE)**
• **BURGER, Willibald**
**D-84489 Burghausen (DE)**
• **GECK, Michael**
**D-84489 Burghausen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 707 134**          **US-A- 4 095 651**
**US-A- 5 346 013**

• **DATABASE WPI Section Ch, Week 9220 Derwent Publications Ltd., London, GB; Class A14, AN 92-165090 XP002062231 & SU 1 666 682 A (UNIV KUBAN) , 30.Juli 1991**
• **DATABASE WPI Section Ch, Week 9311 Derwent Publications Ltd., London, GB; Class A97, AN 93-091996 XP002062524 & SU 1 724 854 A (UNIV KUBAN) , 7.April 1992**
• **DATABASE WPI Section Ch, Week 8405 Derwent Publications Ltd., London, GB; Class A97, AN 84-028279 XP002062232 & SU 1 006 712 A (SHVED G M) , 23.März 1983**
• **DATABASE WPI Section Ch, Week 8125, Derwent Publications Ltd., London, GB; Class A26, AN 81-45427D, XP002062233 & SU 767 152 A (KOVARDAKOV V A) 30 September 1980**

**Beschreibung**

Die Erfindung betrifft ein Verfahren zur Überwindung von Effekten, die den kontinuierlichen Gaszufluß zu einer wasserführenden Erdgasförderbohrung oder Erdgasspeicherbohrung behindern.

Erdgaslagerstätten und Erdgasspeicher sind in natürlichen, unterirdischen Hohlräumen des Gesteins und Erdgasspeicher auch in künstlichen Hohlräumen anzutreffen. Die genannten Gesteine sind von ihrer Herkunft entweder Sedimentgesteine oder Evaporite. Diese Gesteine sind niemals trocken, sondern stehen meist in Verbindung mit Schichtwässern, gegebenenfalls sogar mit ausgedehnten Aquiferen. Wasser in Form von salinaren Lösungen tritt daher sowohl beim Miederbringen einer Bohrung, beim Zementieren der Verrohrung und in der Produktionsphase von Öl und Gaslagerstätten auf. Das Isolieren wasserführender Zonen beim Bohren und Zementieren und das Blockieren des Wasserzuflusses in Förderbohrungen ist aus wirtschaftlichen Gründen notwendig, um die technische Durchführung von Bohrprojekten zu ermöglichen bzw. um die mit hohen Kosten verbundene Beseitigung des geförderten Wassers zu vermeiden oder zu verringern.

Ein besonderer Fall sind Gaslagerstätten oder -speicher, in denen der Schichtdruck bereits deutlich unter den hydrostatischen Druck abgesunken ist. Schichtwasser kann in eine Bohrung nur eindringen, wenn die Wassersättigung im Umfeld der Bohrung groß genug ist, um einen kontinuierlichen Fluß sicherzustellen und die Wasserphase genügend Expansionsenergie aufweist und/oder vom Gas mitgenommen wird. Durch die höhere Wassersättigung im Porenraum wachsen die Druckverluste beim Fließen der Gasphase und der Fließdruck auf der Bohrlochsohle sinkt, wobei die Wassersäule im Bohrloch anwachsen kann. Wenn der Bohrlochfließdruck nicht mehr ausreicht, tritt eine Phase diskontinuierlicher Gasförderung mit verminderten Zuflußmengen ein.

In den verschiedenen Verfahrensvarianten für das Abdichten von Wasserzuflüssen in Bohrungen und bei der Zementation werden in der Regel verstopfende Substanzen eingesetzt, wie Zemente, quellfähige Tone, Epoxydharze mit Faserzusätzen insbesondere bei klüftigen Gesteinen, Gele, Suspensionen mit Zusätzen und feinteiliges Siliciumdioxid. Die Reduktion des Wasserzuflusses in Produktionsbohrungen kann durch zwei Methoden bewirkt werden, nämlich selektives Blockieren und Verstopfen.

Für das Verstopfen von Wasserzuflüssen müssen diese eingrenzbar sein, damit die übrigen produktiven Zonen des Gesteins nicht in Mitleidenschaft gezogen werden. Verstopfende Wirkung können Gele aus polymeren Lösungen von Polyacrylamid, Copolymerisaten und von Biopolymeren ausüben, aber auch Silikagele werden in einigen Anwendungen benannt. Die Vergelung der polymeren Lösung wird durch Beimischung oder Nachflutung vernetzender Substanzen bewirkt. Eine andere Möglichkeit, um verstopfende Wirkungen auszuüben, sind Ausfällungen anorganischer Salze oder organischer Polymere aus wäßrigen oder nichtwäßrigen Lösungsmitteln.

Für das selektive Blockieren der Wasserzuflüsse über der gesamten Mächtigkeit der kohlenwasserstoffführenden Schichten brauchen keine Vorkehrungen für die Auswahl der Wasserzutrittsstellen getroffen werden. Das selektive Blockieren geschieht nach zwei Verfahrensvarianten, nämlich durch Adsorption hydrophiler Polymere oder durch Hydrophobierung der Gesteinsoberflächen.

Die hydrophilen Adsorptionsschichten bewirken eine Erhöhung des Fließwiderstandes für das nachfließende Wasser, der oftmals durch Quellung der Adsorptionsschicht verstärkt wird. Für die Kohlenwasserstoffphase besteht hingegen keine wesentliche Verminderung in der Durchlässigkeit. Beim Hydrophobieren wirkt die Grenzflächenspannung teilweise für das eindringende Wasser in Form des kapillaren Gegendruckes blockierend.

Für das selektive Blockieren werden meist hochmolekulare Polymere auf der Basis von Polyacrylamid (auch in kationischer Form), Copolymere, Terpolymere und Biopolymere eingesetzt. Für das Hydrophobierender Gesteinsoberflächen sind unter anderem auch Silane erprobt worden.

Beispielsweise ist im Derwent Abstract der SU 1315602 die Verwendung einer Mischung aus Tetrabutoxytitan mit geringerem Anteil an Tetrabutoxysilan oder Tetraethoxysilan zur Verstopfung von Bohrungen gegen Wassereinbruch beschrieben. Da diese Wirkstoffe niedrige Flammpunkte aufweisen, sind aufwendige Sicherheitsvorkehrungen notwendig. Im Derwent Abstract der SU 1838587 ist der Einsatz von Ethylsilikaten zur Abdichtung von Öl- und Gasbohrungen gegen durchsickerndes Wasser beschrieben.

In Derwent Publications, Ch, week 9220, AN 92-165090 (& SU-A 1666682) ist ein Verfahren zur Reduktion des Wasserzuflusses in Öl- und Gasbohrungen beschrieben. Dort wird eine Mischung aus Wasser, Siloxanen und Alkohol und Polyvinylacetat-Dispersion eingesetzt. In Derwent Publications, Ch, week 9311, AN 93-091996 (& SU-A 1724854) wird der Wasserzuflusses in Öl- und Gasbohrungen durch eine Mischung aus Siloxanen, Alkohol und Cellulose-Dispersion reduziert.

In allen Fällen wird auch die Gasdurchlässigkeit stark reduziert.

Der Fließwiderstand muß ausreichend sein, um das Wasser am Zutritt zum Produktionsbohrloch zu hindern. Der Fließwiderstand kann jedoch nicht beliebig erhöht werden, da die zur Blockierung injizierten Flüssigkeiten zur Entfaltung ihrer Blockierungswirkung sich im Gestein verteilen müssen und das Gas danach seine Fließwege durch Verdrängen der überschüssigen, nicht absorbierten Behandlungsflüssigkeit freispülen muß. Insbesondere bei einer geringen Gesteinspermeabilität darf der Fließwiderstand nicht zu hoch sein, weil sonst die Behandlungsflüssigkeit nicht injizierbar ist und das Gas den Behandlungsring nicht zu penetrieren vermag.

Es bestand daher die Aufgabe, ein Mittel bereitzustellen, das auf Gesteinsoberflächen adsorbiert, sich auch in gering permeablen Gesteinen gut verteilt, einen dauerhaften Fließwiderstand für Wasser aufbaut jedoch den Zutritt von Gas durch Austragen der Restbehandlungsflüssigkeit nicht behindert und im günstigsten Fall sogar den Reibungswiderstand für Gas herabsetzt, so daß eine dauerhafte stabile Gasförderung die Folge ist.

Die Erfindung betrifft ein Verfahren zur Stabilisierung des Gaszuflusses in wasserführenden Erdgas- und Gasspeicherbohrungen, die mindestens 50 1 Wasser pro 1000 m3 (Vn) gefördertes Erdgas liefern, bei dem eine Dispersion, enthaltend die Komponenten

A) Organosiliciumverbindung als disperser Anteil,
B) hydrophiles mit Wasser mischbares Dispersionsmittel und gegebenenfalls
C) Dispergens

in das wasserführende Gestein injiziert wird.

Vorzugsweise wird die Dispersion mittels einer Bohrung in das wasserführende Gestein injiziert. Dabei adsorbiert Organosiliciumverbindung (A) an der Gesteinsoberfläche. Überschüssige Dispersion wird vorzugsweise durch Nachpressen von Gas im Umfeld der Bohrung verteilt. Als Gas kann hierzu beispielsweise Luft, Stickstoff oder vorzugsweise Erdgas eingesetzt werden.

Die Dispersion weist eine gute Verteilbarkeit im Gestein der erdgashaltigen Lagerstätten und chemische Inaktivität gegenüber den in den Lagerstätten vorhandenen Gesteinen, dem Erdgas und den Fördereinrichtungen auf.

Durch die selektive Adsorption von Organosiliciumverbindung (A) und gegebenenfalls Dispergens (C) an den Gesteinsoberflächen verändert sich die in den Porenraum eingebrachte Dispersion. Der Fließwiderstand im Gestein für Wasser wird stark erhöht, der für Gas erniedrigt. Der Wasserzufluß wird demzufolge reduziert und Erdgas kann besser fließen. Erdgas löst sich kaum in Organosiliciumverbindung (A) und gegebenenfalls Dispergens (C) und kann, wenn keine überschüssige Dispersion die Fließwege verlegt, weitgehend ungehindert zur Förderbohrung durchfließen. Durch die oberflächenglättende Wirkung der Adsorptionsschicht werden die Reibungsdrücke für injiziertes und gefördertes Gas herabgesetzt. Eine erhöhte Förderrate für Erdgas am Bohrloch ist die Folge.

Da die überschüssige Dispersion, bzw. deren Zerfallsprodukte durch Gas in das Umfeld der Bohrung verdrängt werden, entstehen keine Probleme bei der Anförderung der Bohrung infolge hoher Wassersättigung im Gestein des Umfelds.

Insbesondere ist die Organosiliciumverbindung (A) temperaturstabil bei häufig in Lagerstätten vorherrschenden Temperaturen von 70°C und wesentlich darüber. Der Fließwiderstand für Wasser im Gestein bleibt hoch und die Wasserabsperrung lange erhalten.

Wenn in dem Gestein der Lagerstätten Wasser mit hoher Geschwindigkeit fließt, enthält das geförderte Erdgas mindestens 50 1 Wasser pro 1000 $m^3$ gefördertes Erdgas. Besonders geeignet ist das Verfahren für Erdgas- und Gasspeicherbohrungen, die mindestens 100 1 Wasser, insbesondere mindestens 500 l Wasser, pro 1000 $m^3$ geför-dertes Erdgas liefern.

Vorzugsweise ist die Organosiliciumverbindung ein Organopolysiloxan. Das Organopolysiloxan (A) ist vorzugsweise aus Einheiten der allgemeinen Formeln (I) bis (VII)

$$R_3SiO_{1/2} \tag{I},$$

$$R_2SiO \tag{II},$$

$$RSiO_{3/2} \tag{III},$$

$$SiO_{4/2} \tag{IV},$$

$$R_2(R'O)SiO_{1/2} \tag{V},$$

$$R(R'O)SiO \tag{VI},$$

$$R'OSiO_{3/2} \qquad\qquad (VII),$$

aufgebaut, worin

R  einwertige, gegebenenfalls mit Halogenatomen, Cyano-, Amino-, Alkylamino-, quarternären Ammonium-, Mercapto-, Epoxy-, Anhydrido-, Carboxylato-, Sulfonato-, Sulfato-, Phosphonato-, Isocyanato- oder Polyoxyalkylengruppen substituierte Kohlenwasserstoffreste mit 1 bis 18 Kohlenstoffatomen,

R'  einwertige, gegebenenfalls mit Halogenatomen, Cyano-, Amino-, Alkylamino-, quarternären Ammonium-, Mercapto-, Epoxy-, Anhydrido-, Carboxylato-, Sulfonato-, Sulfato-, Phosphonato-, Isocyanato- oder Polyoxyalkylengruppen substituierte Kohlenwasserstoffreste mit 1 bis 30 Kohlenstoffatomen und Wasserstoffatome bedeuten.

Beispiele für Kohlenwasserstoffreste **R** und **R'** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl-, Allyl- und der 5-Hexen-1-ylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der ß-Phenylethylrest.

Beispiele für substituierte Reste **R** und **R'** sind Cyanalkylreste, wie der β-Cyanethylrest, und mit Fluor, Chlor oder Bromatomen halogenierte Kohlenwasserstoffreste, beispielsweise Halogenalkylreste, wie der 3,3,3-Trifluor-n-propylrest, der 2,2,2,2',2',2'-Hexafluorisopropylrest, der 8 Heptafluorisopropylrest, und Halogenarylreste, wie der o-, mund p-Chlorphenylrest.

Vorzugsweise sind mindestens 90 Mol-% der Reste **R** Methyl-, Ethyl- oder Phenylreste, insbesondere Methylreste.

Beispiele für die durch Polyoxyalkylengruppen substituierten Reste **R** und **R'** sind die Reste der allgemeinen Formel (VIII)

$$-R^1\text{-}[O(CR^2{}_2)_c]_d OR^3 \qquad\qquad (VIII),$$

in der

$R^1$  einen zweiwertigen $C_1$- bis $C_6$-Alkylenrest,

$R^2$  Wasserstoffatome, oder einwertige $C_1$- bis $C_6$-Kohlenwasserstoffreste,

$R^2$  Wasserstoffatome, oder einwertige $C_1$ - bis $C_6$-Kohlenwasserstoffreste,

$R^3$  Wasserstoffatome, einwertige $C_1$ - bis $C_6$-Kohlenwasserstoffreste, $C_1$-$C_8$-Acylreste, Ethyletherreste oder Silylreste,

c  Wasserstoffatome, einwertige $C_1$- bis $C_6$-Kohlenwasserstoffreste, $C_1$-$C_8$-Acylreste, Ethyletherreste oder Silylreste,

c  die Werte 0, 1, 2, 3, 4 oder 5, vorzugsweise 2 oder 3 und

d  ganzzahlige Werte von 1 bis 100, vorzugsweise 1 bis 10 bedeuten.

Beispiele für die zweiwertigen Reste **R¹** sind gesättigte geradoder verzweigtkettige oder cyclische Alkylenreste wie der Methylen- und Ethylenrest sowie Propylen-, Butylen-, Pentylen-, Hexylen-, 2-Methylpropylen-, Cyclohexylenreste, oder ungesättigte Alkylenreste wie der Propenylen- und Hexenylenrest.

Beispiele für die einwertigen Reste **R²** und **R³** sind bei den vorstehenden Beispielen für **R** und **R'** aufgeführt. Beispiele für Acylreste sind der Acetylrest, für Ethyletherreste der Tetrahydropyranylrest und für Silylreste der Trimethylsilylrest.

Weitere Beispiele für die durch Polyoxyalkylengruppen substituierten Reste **R** und **R'** sind die Reste der allgemeinen Formel (IX)

$$-C\text{-}[O(CR^2{}_2)_c]_d OR^2 \qquad\qquad (IX),$$

$$HC\text{-}[O(CR^2_2)_c]_d OR^2$$

worin $R^2$, **c** und **d** die vorstehend für die allgemeine Formel (VIII) angegebenen Bedeutungen aufweisen.

Vorzugsweise weisen höchstens 20 Mol-% der Einheiten des Organopolysiloxans (A) die allgemeinen Formeln (V) bis (VII) auf.

Vorzugsweise enthält das Organopolysiloxan (A) mindestens 50 Gew.-%, insbesondere mindestens 80 Gew.-% Organopolysiloxane (A1), welche zu mindestens 90 Mol-%, insbesondere 95 Mol-% aus Einheiten der allgemeinen Formel (II) bestehen. Weiterhin ist bevorzugt, daß Organopolysiloxan (A1) eine durchschnittliche Viskosität von 5 bis 2 000 000 mPa.s, insbesondere von 350 bis 60 000 mPa.s bei 25°C aufweist.

Vorzugsweise enthält das Organopolysiloxan (A) mindestens 2 Gew.-%, insbesondere mindestens 5 Gew.-% und vorzugsweise höchstens 70 Gew.-% Organopolysiloxanharze (A2), welche zu mindestens 90 Mol-%, insbesondere 95 Mol-% aus Einheiten der allgemeinen Formeln (I), (IV.) und (V) bestehen. Beispielsweise können die Organopolysiloxanharze (A2) bei Raumtemperatur fest sein und 0,25 bis 1,25 Einheiten der allgemeinen Formel (I) pro Einheit der allgemeinen Formel (IV) aufweisen.

Diese bevorzugten Organopolysiloxanharze (A2) können, bedingt durch ihre Herstellung, bis zu insgesamt 5 Gew.-% Si-gebundene Alkoxyreste oder Hydroxylgruppen enthalten. Die Organopolysiloxanharze (A2) sind in der Regel mit Polydimethylsiloxanen nicht vollständig mischbar.

Obwohl in den allgemeinen Formeln (I) bis (III) nicht aufgeführt, kann ein Teil der Reste **R** durch direkt an Siliciumatome gebundene Wasserstoffatome ersetzt sein. Dies ist aber nicht bevorzugt.

Aber auch vernetzende Organopolysiloxane sind geeignet. So können beispielsweise auch wäßrige Silicondispersionen, die nach Entfernen des Wassers ein Elastomer ergeben, eingesetzt werden.

Vorzugsweise ist die Organosiliciumverbindung auch ein Organosilan. Das Organosilan (A) weist vorzugsweise die vorstehenden Reste **R** und **OR'** auf. Vorzugsweise ist im Organosilan (A) mindestens ein Rest R vorhanden.

Vorzugsweise besitzt das Organosilan (A) 1 oder 2 Reste **R** und 2 oder 3 Reste **OR-**. Vorzugsweise sind die Reste **OR-** $C_1$-$C_6$-Alkoxyreste, insbesondere $C_2$- oder $C_3$-Alkoxyreste. Vorzugsweise sind die Reste R gegebenenfalls Amino- oder Alkylamino substituierte $C_1$-$C_{12}$-Alkylreste.

Aber auch Organosiliciumverbindungen, die in dem Dispersionsmittel (B) ohne Dispergentien (C) spontan eine Dispersion bilden, sog. selbstdispergierende Organosiliciumverbindungen insbesondere Organopolysiloxane, sind geeignet.

Vom hydrophilen, mit Wasser mischbaren Dispersionsmittel (B) sind vorzugsweise mindestens 10 Gewichtsteile, insbesondere mindestens 50 Gewichtsteile mit 100 Gewichtsteilen Wasser mischbar. Als hydrophiles mit Wasser mischbares Dispersionsmittel (B) sind polare Stoffe, beispielsweise aliphatische Monoalkohole, wie Methanol, Ethanol, n-Propanol und i-Propanol, Glykole, Ether, wie Dioxan und Tetrahydrofuran, Dimethylformamid und insbesondere Wasser bevorzugt.

Als Dispergentien (C) eignen sich eine Vielzahl von Wirkstoffen, die man zweckmäßig in grenzflächenaktive Dispergentien, wie nichtionische, anionische, kationische und ampholytische, in zum Teil grenzflächenaktive Dispergentien, wie hochmolekulare Stoffe und Naturprodukte, sowie in meist geringe Grenzflächenaktivität aufweisende Dispergentien, wie anorganische und spezielle Dispergierhilfsmittel, einteilt. Eine Übersicht ist in Ullmanns Encyklopädie der technischen Chemie, Verlag Chemie Weinheim, 4. Auflage 1975, Bd. 10, S. 449 - 473 genannt.

Vorzugsweise wird das Dispergens (C) ausgewählt unter den nachstehenden Dispergierhilfsmitteln:

1. Alkylsulfate, beispielsweise mit einer Kettenlänge von 8-18 C-Atomen, Alkylethersulfate mit 8 - 18 C-Atomen im hydrophoben Rest und 1 - 40 Ethylenoxid(EO)- bzw. Propylenoxid(PO)-Einheiten.

2. Sulfonate, z.B. Alkylsulfonate mit 8 - 18 C-Atomen, Alkylarylsulfonate mit 8 - 18 C-Atomen, Ester und Halbester der Sulfobernsteinsäure mit einwertigen Alkoholen oder Alkylphenolen mit 4 - 15 C-Atomen; gegebenenfalls können diese Alkohole oder Alkylphenole auch mit 1 - 40 EO-Einheiten ethoxyliert sein.

3. Alkali- und Ammoniumsalze von Carbonsäuren und Poly(alkylenglycol)ether-Carbonsäuren mit 8 - 20 C-Atomen im Alkyl-, Aryl-, Alkaryl- oder Aralkylrest und 1 - 40 EO- bzw. PO-Einheiten.

4. Phosphorsäureteilester und deren Alkali- und Ammoniumsalze, z.B. Alkyl- und Alkarylphosphate mit 8 - 20 C-Atomen im organischen Rest, Alkylether- bzw. Alkaryletherphosphate mit 8 - 20 C-Atomen im Alkyl- bzw. Alkarylrest und 1 - 40 EO-Einheiten.

5. Alkylpolyglycolether, vorzugsweise solche mit 2 - 40 EO-Einheiten und Alkylresten von 4 - 20 C-Atomen.

6. Alkylarylpolyglycolether mit 2 - 40 EO-Einheiten und 8 -20 C-Atomen in den Alkyl- und Arylresten.

7. Ethylenoxid/Propylenoxid(EO/PO)-Blockcopolymere mit 8 - 40 EO- bzw. PO-Einheiten.

8. Fettsäurepolyglycolester mit 6 - 24 C-Atomen und 2 - 40 EO-Einheiten.

9. Fettsäureester von Glycerin, Sorbit und Pentaerythrit.

10. Alkylpolyglykoside der allgemeinen Formel R''-O-$Z_O$, worin R'' einen linearen oder verzweigten, gesättigten oder ungesättigten Alkylrest mit im Mittel 8 - 24 C-Atomen und $Z_O$ einen Oligoglykosidrest mit im Mittel o = 1 - 10 Hexose- oder Pentoseeinheiten oder Gemischen davon bedeuten.

11. Polare Gruppen enthaltende lineare Organopolysiloxane mit Alkoxygruppen und bis zu 24 C-Atomen und/oder bis zu 40 EO-und/oder PO-Gruppen.

12. Salze von primären, sekundären und tertiären Fettaminen mit 8 - 24 C-Atomen mit Essigsäure, Schwefelsäure, Salzsäure und Phosphorsäuren.

13. Quarternäre Alkyl- und Alkylbenzylammoniumsalze, deren Alkylgruppen 1- 24 C-Atome besitzen, insbesondere die Halogenide, Sulfate, Phosphate, Acetate und Hydroxide.

14. Alkylpyridinium-, Alkylimidazolinium- und Alkyloxazoliniumsalze, deren Alkylkette bis zu 18 C-Atome besitzt, speziell in Form ihrer Halogenide, Sulfate, Phosphate und Acetate.

15. hochmolekulare Stoffe wie Polymerisate, z.B. Polyvinylalkohol und Mischpolymerisate, wie Vinylacetat/Ethylen-Polymerisate.

16. Naturstoffe und ihre Abwandlungsprodukte, wie Polysaccharide oder Cellulose und Cellulosederivate, wie Celluloseether.

Es kann ein Dispergens, es können auch Gemische mehrerer Dispergentien eingesetzt werden.

Besonders bevorzugt als Dispergentien sind die oben unter 1, 2, 3, 5, 6, 7 und 8, 12, 13, 15, 16 aufgeführten Dispergentien, insbesondere die unter 2, 3, 5, 6 und 13 aufgeführten Dispergentien.

Vorzugsweise werden auf 100 Gewichtsteile Organosiliciumverbindungen (A) 2,5 bis 250, vorzugsweise 5 bis 150, insbesondere 10 bis 70 Gewichtsteile Dispergens (B) eingesetzt.

Als Zusatzstoffe (D) kann die Dispersion beispielsweise Füllstoffe, Fungizide, Bakterizide, Algicide, Biocide, Geruchsstoffe, Korrosionsinhibitoren, native Öle, Verdickungsmittel, Netzmittel, Cotenside und organische Lösungsmittel enthalten.

Herstellungsbedingt können die Dispersionen geringe Anteile an organischen Lösungsmitteln enthalten. Insbesondere bei der Herstellung von Organopolysiloxanharzen werden häufig organische Lösungsmittel oder native Öle eingesetzt. Falls die Dispersion organische Lösungsmittel enthält, beträgt deren Anteil vorzugsweise höchstens 50 Gewichtsteile, insbesondere 5 bis 20 Gewichtsteile, bezogen auf 100 Gewichtsteile Organosiliciumverbindungen (A).

Der Anteil von Füllstoff beträgt vorzugsweise bis zu 20 Gewichtsteile, insbesondere 2 bis 8 Gewichtsteile pro 100 Gewichtsteile Organosiliciumverbindungen (A).

Die Herstellung der Dispersionen ist dem Fachmann bekannt.

Für die anwendungsfertige Dispersion beträgt die Summe der Komponenten Organosiliciumverbindungen (A), Dispersionsmittel (B), Dispergentien (C) und gegebenenfalls Zusatzstoffe (D) vorzugsweise 0,01 bis 25 Gew.-%, besonders bevorzugt 0,05 bis 10 Gew.-%, insbesondere 0,1 bis 2 Gew.-%, bezogen auf das Gewicht der eingesetzten Dispersion.

Die mittlere Teilchengröße der Dispersion beträgt vorzugsweise höchstens 1000 μm, insbesondere 5 nm bis 250 μm.

Die Zusammensetzungen, Teilchengrößen und Konzentrationen der Dispersionen können an die in den Lagerstätten vorherrschenden Gesteinsarten und Bedingungen, wie Temperatur und Salzgehalt angepaßt werden, so daß sie auch unter extremen Bedingungen injizierbar sind. Die Teilchengröße wird vorzugsweise so gewählt, daß die Porengröße des Gesteins nicht erreicht wird. Durch den hohen Anteil an den Komponenten Organosiliciumverbindungen (A), Dispersionsmittel (B), Dispergens (C) und gegebenenfalls Zusatzstoffe (D) in der Dispersion kann das in das Gestein eingebrachte Dispersionsmittel klein gehalten werden. Die Konzentration der Dispersion kann an Gesteinseigenschaften, wie Durchlässigkeit und Eindringtiefe angepaßt werden. Bei hohen Durchlässigkeiten können kleinere Mengen an gröberdispersen Dispersionen mit höheren Gehalten an den Komponenten Organosiliciumverbindungen (A), Dispersionsmittel (B), Dispergens (C) und gegebenenfalls Zusatzstoffen (D) eingesetzt werden. Bei geringen Gesteinsdurchlässigkeiten werden größere Mengen an feindispersen Dispersionen mit geringerer Konzentration eingesetzt.

Geeignet sind auch Substanzen, welche erst unter Anwendungsbedingungen eine Organosiliciumverbindung (A) in einem Dispersionsmittel (B) bilden, in dem sie vorher löslich waren.

Als Beispiele hierzu sind glycolfunktionelle Siliconöle zu nennen, die in polaren Dispersionsmitteln wie Wasser löslich sind, aber dann bei höheren Temperaturen einen Trübungspunkt erreichen.

Im den nachfolgenden Beispielen sind, falls jeweils nicht anders angegeben,

a) alle Mengenangaben auf das Gewicht bezogen;
b) alle Drücke 0,1013 MPa (abs.);
c) alle Temperaturen 20° C .

d) Vn = Volumen bei Normbedingungen: 0°C, 0,1013 MPa (abs.);

e) PV = Porenvolumina;

f) als Gas Stickstoff eingesetzt worden.

## Beispiele

Die Beispiele wurden auf nachstehende Weise im angegebenen Zeitablauf durchgeführt:

Eine Hassler Zelle, wurde mit Kernen aus trockenem Bentheimer Sandstein in den Dimensionen Länge 0,1 m und Durchmesser 0,03 m befüllt.

Jeder Kern wurde mit Stickstoff mit einer konstanten Fließgeschwindigkeit von 50 m/d durchströmt. Der Differenzdruck $\Delta p_g$ zwischen dem Kerneingang und dem -ausgang wurde gemessen.

Die Gaspermeabilität $k_g$ wurde nach der Darcy-Gleichung für kompressible Fluide (1) berechnet:

$$k_g = \frac{2Q_g\,\mu_g\,p_0\,L}{A(p_1^2 - p_2^2)}\ (1), \tag{1}$$

in der

$Q_g$ die Fließrate von Gas, $\mu_g$ die Viskosität von Gas, $p_0$ den Atmosphärendruck 0,1013 MPa, L die Kernlänge, A die Kernquerschnittsfläche, $p_1$ den Injektionsdruck und $p_2$ den Kernausgangsdruck bedeuten. Die Gaspermeabilitäten $k_g$ sind nachstehend in Tabelle III aufgeführt.

Der Kern wurde danach mit Wasser unter vermindertem Druck von 0,002 MPa im Exsikkator gesättigt, in eine Hassler-Zelle eingebaut und mit Wasser mit einer konstanten Fließgeschwindigkeit von 5 m/d durchströmt. Der Differenzdruck $\Delta p_w$ zwischen dem Kerneingang und dem -ausgang wurde gemessen.

Die spezifischen Wasserpermeabilitäten $k_w$ wurden nach der Darcy-Gleichung für inkompressible Fluide (2) berechnet:

$$k_w = \frac{2Q_w\,\mu_w\,L}{A(p_1 - p_2)} \tag{2}$$

in der

$Q_w$ die Fließrate von Wasser und $\mu_w$ die Viskosität von Wasser bedeuten, und L, A, $p_1$ und $p_2$ die vorstehenden Bedeutungen aufweisen. Die spezifischen Wasserpermeabilitäten $k_w$ sind nachstehend in Tabelle III aufgeführt.

In den Kern wurden 20 Porenvolumina PV Siliconemulsion injiziert. Der Differenzdruck $\Delta p_e$ zwischen dem Kerneingang und dem -ausgang wurde gemessen. Der Widerstandsfaktor **RF** = $\Delta p_e/\Delta p_w$ wurde als Maß für den Fließwiderstand berechnet und ist nachstehend in Tabelle III aufgeführt.

In den Kern wurden 20 Porenvolumina Wasser injiziert. Der Differenzdruck $\Delta p_{wr}$ zwischen dem Kerneingang und dem -ausgang wurde bei Anwesenheit der Emulsion als Restphase gemessen. Der residuelle Widerstandsfaktor RRF = $\Delta p_{wr}/\Delta p_w$ wurde als Maß für den residuellen Fließwiderstand berechnet und ist nachstehend in Tabelle III aufgeführt.

Die in der Tabelle I nachstehend näher beschriebenen 4 Siliconemulsionen wurden in Beispiel 1 - 4 untersucht.

Parallel zu diesen Untersuchungen wurde der Einfluß der residuellen Siliconölemulsionen auf die Gaspermeabilität an den gleichen Kernen und Emulsionssystemen wie in den Beispielen eins und drei für den Widerstandsreaktor Wasser untersucht.

Die trockenen in Tabelle IV charakterisierten Kerne wurden unter Vakuum von 0,002 MPa im Exsikkator mit Wasser gesättigt, in eine Hassler-Zelle eingebaut und mit Wasser bei einer konstanten Fließgeschwindigkeit von 5 m/d durchströmt. Der Differenzdruck zwischen Kernein- und Kernausgang wurde gemessen und nach Gleichung (2) die Wasserpermeabilität bei 100% Wassersättigung bestimmt. Danach wurde das Wasser mit Gas bei einer Fließgeschwindigkeit von 500 m/d verdrängt bis sich eine Restwassersättigung zwischen 10 und 15% des Porenvolumens eingestellt hatte. Die verdrängte Wasserphase wurde gesammelt und aus der Volumenbilanz zwischen ursprünglicher Wassermenge und der verdrängten Wassermenge die Restwassersättigung nach Gleichung (3) bestimmt:

$$S_{wr} = \frac{V_{wi} - V_{wp}}{V_{wi}} \tag{3}$$

in der

$V_{wi}$ ursprünglich im Kern befindliches Wasservolumen und

$V_{wp}$ xproduziertes Wasservolumen bedeuten.

Anschließend wurde bei einer Fließgeschwindigkeit von 50 m/d für Gas der Differenzdruck zwischen Kernein- und Kernausgang bestimmt und die Gaspermeabilität bei Restwassersättigung nach Formel (1) berechnet.

Der Kern wurde darauf mit 20 PV Siliconölemulsion bei einer Fließgeschwindigkeit von 5 m/d geflutet und die Siliconölemulsion durch Gas bei einer Fließgeschwindigkeit von 500 m/d verdrängt bis sich eine Restemulsionssättigung zwischen 10 und 15% des Porenvolumens einstellte. Die Sättigungsbestimmung erfolgte in gleicher Weise wie bei der Verdrängung des Wassers durch Gas nach Gleichung (3).

Darauf wurde die Gaspermeabilität des behandelten Kerns in gleicher Weise wie die bei Restwassersättigung gemessene bestimmt. In der Tabelle IV ist ein Vergleich der Gaspermeabilität bei Restwasser- und bei Restemulsionssättigung dargestellt. Die hier verwendete relative, d.h. dimensionslose Gaspermeabilität ist das Verhältnis von der Gaspermeabilität bei Restwasser- bzw. Restemulsionssättigung zur spezifischen Gaspermeabilität des Kerns. Im Gegensatz zu den in der Literatur zitierten Behandlungsergebnissen tritt keine Reduktion der Gaspermeabilität, sondern ein Anstieg der Gaspermeabilität ein.

Tabelle I

| Disper-sion | FG in % | Wirkstoff | Emulgiersystem/Cosolvent |
|---|---|---|---|
| 1 | 52.00 | 33 % eines aminofunktionellen Siliconöls der Formel x, wobei die Aminzahl 0,25, die Viskosität 200 mm²/s und R = Me beträgt | 5 % Diethylenglycolmonobutylether<br>13 % Trimethylnonylpolyglycolether mit 6 EO-Einheiten<br>1 % Fettalkoholpolyglycolether mit einer gesättigten Alkylgruppe ($C_{16}$-$C_{18}$) und 25 EO-Einheiten<br>Benzalkylammoniumchlorid als Konservierungsmittel |
| 2 | 50.00 | 33 % eines aminofunktionellen Siliconöls der Formel x, wobei die Aminzahl 0,15, die Viskosität 5000 mm²/s und R = OH beträgt | 5 % Diethylenglycolmonobutylether<br>11 % Isotridecylpolyglycolether mit 5 EO-Einheiten<br>1 % Fettalkoholpolyglycolether mit einer gesättigten Alkylgruppe ($C_{16}$ - $C_{18}$) und 25 EO-Einheiten<br>Benzalkylammoniumchlorid als Konservierungsmittel |
| 3 | 39.00 | 35 % eines endgestopperten PDMS mit einer Viskosität von 12500 mm²/s | 4 % Isotridecylpolyglycolether mit 10 EO-Einheiten<br>Kathon als Konservierungsmittel |
| 4 | 41.00 | 35 % eines endgestopperten PDMS mit einer Viskosität von 12500 mm²/s | 3 % Alkyl($C_{14}$-$C_{16}$)sulfonat<br>3 % Triethanolammoniumalkyl($C_{12}$-$C_{14}$)sulfat<br>Formaldehyd als Konservierungsmittel |

Formel x:

$$RSiMe_2O[SiMe_2O]_m[SiMeR'O]_nSiMe_2R,$$

wobei

$$R' = (CH_2)_3NH\text{-}CH_2\text{-}CH_2\text{-}NH_2$$

Die Viskositäten der Emulsionen 1 bis 4 mit einem Gehalt an Siliconwirkstoff (A) von 10 Gew.-% sind nachstehend in Tabelle II aufgeführt. Die Viskositäten wurden bei 25°C und einer Schergeschwindigkeit von 11 $s^{-1}$ gemessen. Bei den in den Beispielen angewendeten Verdünnungen mit destilliertem Wasser auf eine Konzentration an Siliconwirkstoff (A) von 0,2 Gew.-% sind die Viskositäten nahezu identisch mit der des Wassers.

Tabelle II

| Siliconemulsion | Viskosität [mPa.s] |
|---|---|
| 1 | 3,27 |
| 2 | 1,42 |
| 3 | 1,26 |
| 4 | 1,62 |

Tabelle III

| Beispiel Silicon-emulsion | Kernmaterial Bentheimer Sandstein | | | RF-Werte bei injizierten Porenvolumina Siliconemulsion | | | | RF-Werte bei injizierten Porenvolumina Wasser | | | |
|---|---|---|---|---|---|---|---|---|---|---|---|
| | Porosität | Gaspermeabilität $k_g$ [µm²] | Wasserpermeabilität $k_w$ [µm²] | 5 | 10 | 15 | 20 | 5 | 10 | 15 | 20 |
| 1 | 0,208 | 1,99 | 1,82 | 0,97 | 0,94 | 0,94 | 0,98 | 1,21 | 2,1 | 2,72 | 3,1 |
| 2 | 0,221 | 2,85 | 2,61 | 1,03 | 1,11 | 1,23 | 1,3 | 1,89 | 2,49 | 3,06 | 3,5 |
| 3 | 0,234 | 3,41 | 3,31 | 0,91 | 0,91 | 0,91 | 0,97 | 1,12 | 1,36 | 1,85 | 2,4 |
| 4 | 0,234 | 3,21 | 3,2 | 0,97 | 1 | 1,05 | 1,15 | 1,73 | 2,39 | 2,86 | 3,35 |

EP 0 956 428 B1

Die RF-Werte betragen vor der Injektion definitionsgemäß 1.

Während der Nachflutphase mit Wasser steigen die RRF-Werte kontinuierlich an. Der Anstieg der RRF-Werte ist nach der Zugabe von 20 Porenvolumina Wasser noch nicht beendet. Die Dispersionen bauen einen dauerhaften Fließwiderstand für Wasser auf.

Tabelle IV

| Silicon-emulsions-system | Kernmaterial: Porosiät | Benth. Sands. Spez. Gaspermeabilität kg ($\mu m^2$) | Restwasser-sättigung $S_{wr}$ % | Relative Gas-permeabilität % | Restemul-sionssätti-gung % | Relative Gas-permeabilität |
|---|---|---|---|---|---|---|
| 1 | 0,208 | 1,99 | 15 | 0,7 | 15 | 0,74 |
| 3 | 0,234 | 3,41 | 13 | 0,7 | 13 | 0,8 |

EP 0 956 428 B1

EP 0 956 428 B1

**Patentansprüche**

1. Verfahren zur Stabilisierung des Gaszuflusses in wasserführenden Erdgas- und Gasspeicherbohrungen, die mindestens 50 l Wasser pro 1000 m$^3$ Vn gefördertes Erdgas liefern, bei dem eine Dispersion, enthaltend die Komponenten

   A) Organosiliciumverbindung als disperser Anteil,
   B) hydrophiles mit Wasser mischbares Dispersionsmittel und gegebenenfalls
   C) Dispergens

   in das wasserführende Gestein injiziert wird.

2. Verfahren nach Anspruch 1, bei dem die Organosiliciumverbindung (A) ein Organopolysiloxan ist, welches aus Einheiten der allgemeinen Formeln (I) bis (VII)

$$R_3SiO_{1/2} \qquad (I),$$

$$R_2SiO \qquad (II),$$

$$RSiO_{3/2} \qquad (III),$$

$$SiO_{4/2} \qquad (IV),$$

$$R_2(R'O)SiO_{1/2} \qquad (V),$$

$$R(R'O)SiO \qquad (VI),$$

$$R'OSiO_{3/2} \qquad (VII),$$

   aufgebaut ist, worin

   **R** einwertige, gegebenenfalls mit Halogenatomen, Cyano-, Amino-, Alkylamino-, quarternären Ammonium-, Mercapto-, Epoxy-, Anhydrido-, Carboxylato-, Sulfonato-, Sulfato-, Phosphonato-, Isocyanato- oder Polyoxyalkylengruppen substituierte Kohlenwasserstoffreste mit 1 bis 18 Kohlenstoffatomen,
   **R'** einwertige, gegebenenfalls mit Halogenatomen, Cyano-, Amino-, Alkylamino-, quarternären Ammonium-, Mercapto-, Epoxy-, Anhydrido-, Carboxylato-, Sulfonato-, Sulfato-, Phosphonato-, Isocyanato- oder Polyoxyalkylengruppen substituierte Kohlenwasserstoffreste mit 1 bis 30 Kohlenstoffatomen und Wasserstoffatome bedeuten.

3. Verfahren nach Anspruch 1 und 2, bei dem die Organosiliciumverbindung (A) ein Organosilan ist, das die vorstehenden Reste **R** und **OR'** aufweist.

4. Verfahren nach Anspruch 1 bis 3, bei dem das hydrophile, mit Wasser mischbare Dispersionsmittel (B) ausgewählt wird aus aliphatischen Monoalkoholen, Glykolen, Ethern, Dimethylformamid und Wasser.

5. Verfahren nach Anspruch 1 bis 4, bei dem als Dispergentien (C) Sulfonate, Alkali- und Ammoniumsalze von Carbonsäuren Alkylpolyglycolether, Alkylarylpolyglycolether oder quarternäre Alkyl- und Alkylbenzylammoniumsalze eingesetzt werden.

6. Verfahren nach Anspruch 1 bis 5, bei dem auf 100 Gewichtsteile Organosiliciumverbindung (A) 5 bis 150 Gewichtsteile Dispergens (C) eingesetzt werden.

7. Verfahren nach Anspruch 1 bis 6, bei dem die Dispersion mittels einer Bohrung in das wasserführende Gestein injiziert, sowie überschüssige Dispersion im Umfeld der Bohrung durch Nachpressen von Gas verteilt wird.

**Claims**

1. Process for stabilizing the gas flow in water-bearing natural gas wells and gas storage wells which deliver at least 50 1 of water per 1000 $m^3$ (S.T.P.) of natural gas produced,
   in which a dispersion comprising the components

   A) an organosilicon compound as disperse fraction,
   B) hydrophilic water-miscible dispersion medium and, if appropriate,
   C) a dispersant

   is injected into the water-bearing rock.

2. Process according to Claim 1, in which the organosilicon compound (A) is an organopolysiloxane which is made up of units of the general formulae (I) to (VII)

$$R_3SiO_{1/2} \qquad (I),$$

$$R_2SiO \qquad (II),$$

$$RSiO_{3/2} \qquad (III),$$

$$SiO_{4/2} \qquad (IV),$$

$$R_2(R'O)SiO_{1/2} \qquad (V),$$

$$R(R'O)SiO \qquad (VI),$$

$$R'OSiO_{3/2} \qquad (VII),$$

where

R    denotes monovalent hydrocarbon radicals having 1 to 18 carbon atoms, which are optionally substituted by halogen atoms, cyano, amino, alkylamino, quaternary ammonium, mercapto, epoxy, anhydrido, carboxylato, sulphonato, sulphato, phosphonato, isocyanato or polyoxyalkylene groups,

R'   denotes monovalent hydrocarbon radicals having 1 to 30 carbon atoms and hydrogen atoms, which are optionally substituted by halogen atoms, cyano, amino, alkylamino, quaternary ammonium, mercapto, epoxy, anhydrido, carboxylato, sulphonato, sulphato, phosphonato, isocyanato or polyoxyalkylene groups.

3. Process according to Claim 1 and 2, in which the organosilicon compound (A) is an organosilane which has the above radicals **R** and **OR'**.

4. Process according to Claim 1 to 3, in which the hydrophilic water-miscible dispersion medium (B) is selected from aliphatic monoalcohols, glycols, ethers, dimethylformamide and water.

5. Process according to Claim 1 to 4, in which, as dispersants (C), use is made of sulphonates, alkali metal salts and ammonium salts of carboxylic acids, alkyl polyglycol ethers, alkylaryl polyglycol ethers or quaternary alkyl- and alkylbenzylammonium salts.

6. Process according to Claim 1 to 5, in which 5 to 150 parts by weight of dispersant (C) are used per 100 parts by weight of organosilicon compound (A).

7. Process according to Claim 1 to 6, in which the dispersion is injected into the water-bearing rock by means of a well, and excess dispersion is distributed in the vicinity of the well by subsequently forcing in gas.

**Revendications**

1. Procédé de stabilisation du flux de gaz dans des puits aquifères de gaz naturel et de réserve de gaz, qui produisent au moins 50 1 d'eau pour 1000 m$^3$ Vn de gaz naturel extrait, dans lequel une dispersion comprenant les composants

   A) un composé organosilicié en tant que fraction dispersée,
   B) un milieu de dispersion hydrophile miscible à l'eau et éventuellement
   C) un agent dispersant

   est injectée dans la roche aquifère.

2. Procédé selon la revendication 1, dans lequel le composé organosilicié (A) est un organopolysiloxane qui est composé de motifs de formules générales (I) à (VII)

$$R_3SiO_{1/2} \qquad (I),$$

$$R_2SiO \qquad (II),$$

$$RSiO_{3/2} \qquad (III),$$

$$SiO_{4/2} \qquad (IV),$$

$$R_2(R'O)SiO_{1/2} \qquad (V),$$

$$R(R'O)SiO \qquad (VI),$$

$$R'OSiO_{3/2} \qquad (VII),$$

dans lesquelles

R représente des radicaux hydrocarbonés monovalents ayant de 1 à 18 atomes de carbone, éventuellement substitués par des atomes d'halogène, des groupes cyano, amino, alkylamino, ammonium quaternaire, mercapto, époxy, anhydrido, carboxylato, sulfonato, sulfato, phosphonato, isocyanato ou polyoxyalkylène,

R' représente des radicaux hydrocarbonés monovalents ayant de 1 à 30 atomes de carbone, éventuellement substitués par des atomes d'halogène, des groupes cyano, amino, alkylamino, ammonium quaternaire, mercapto, époxy, anhydrido, carboxylato, sulfonato, sulfato, phosphonato, isocyanato ou polyoxyalkylène, et des atomes d'hydrogène.

3. Procédé selon les revendications 1 et 2, dans lequel le composé organosilicié (A) est un organosilane renfermant les radicaux R et OR' ci-dessus.

4.  Procédé selon les revendications 1 à 3, dans lequel le milieu de dispersion hydrophile miscible à l'eau (B) est choisi parmi des monoalcools aliphatiques, des glycols, des éthers, le diméthylformamide et l'eau.

5.  Procédé selon les revendications 1 à 4, dans lequel on utilise, en tant qu'agents dispersants (C), des sulfonates, des sels de métaux alcalins et d'ammonium d'acides carboxyliques, des éthers d'alkylpolyglycol, des éthers d'alkylarylpolyglycol ou des sels d'alkylammonium et d'alkylbenzylammonium quaternaires.

6.  Procédé selon les revendications 1 à 5, dans lequel on utilise de 5 à 150 parties en poids d'agent dispersant (C) pour 100 parties en poids de composé organosilicié (A).

7.  Procédé selon les revendications 1 à 6, dans lequel la dispersion est injectée dans la roche aquifère au moyen d'un puits, et la dispersion en excès est répartie au voisinage du puits en pressant ultérieurement du gaz.